Europäisches Patentamt

European Patent Office

Office européen des brevets

(19)

(11) Veröffentlichungsnummer: **0 506 990 A1**

## (12) EUROPÄISCHE PATENTANMELDUNG

(21) Anmeldenummer: **91105217.3**

(22) Anmeldetag: **02.04.91**

(51) Int. Cl.5: **G05B 19/407**, G05B 19/42

(43) Veröffentlichungstag der Anmeldung:
**07.10.92 Patentblatt 92/41**

(84) Benannte Vertragsstaaten:
**DE FR GB IT NL SE**

(71) Anmelder: **SIEMENS AKTIENGESELLSCHAFT**
**Wittelsbacherplatz 2**
**W-8000 München 2(DE)**

(72) Erfinder: **Hoos, Gerd, Dipl.-Ing.**
**Schleienweg 7**
**W-8520 Erlangen(DE)**

(54) Verfahren zur Beschleunigungs- und Geschwindigkeitsführung mindestens einer steuerbaren Achse einer Werkzeugmaschine oder eines Roboters.

(57) Mit dem Verfahren läßt sich bei geringem Rechenaufwand eine Achsbewegung, insbesondere in Form einer Pendelbewegung einer numerisch gesteuerten Achse durchführen. Dazu wird das Pendelprofil in die Zeitintervalle $(t_{n-1}, t_n)$ unterteilt, in denen unterschiedliche Bewegungsvorgänge (Beschleunigung, keine oder konstante Geschwindigkeit) stattfinden. Bei jedem Systemtakt wird geprüft, in welchem Zeitintervall $(t_{n-1}, t_n)$ die Summe der bereits ausgegebenen Systemtakte $(i_N T)$ liegt, so daß mit der entsprechenden, präparativ bestimmten, Weg-Zeit-Gleichung $(S_n(t))$ die von der Steuerung auszugebenden Wegabschnitte berechnet und an die Bewegungsvorrichtung der Achse ausgegeben werden können. Eine Änderung der Bahngeschwindigkeit durch eine Override-Vorgabe kann im Feininterpolator durch Multiplikation der Systemtakte $(T)$ mit einem konstanten Faktor $(f)$ bewirkt werden.

FIG 2

FIG 5

EP 0 506 990 A1

Bei bestimmten Bearbeitungsvorgängen, die mit numerisch gesteuerten Werkzeugmaschinen oder Robotern durchgeführt werden, wird einer Bahnbewegung eine sogenannte Pendelbewegung überlagert. Aus der Robotertechnik sind zwei unterschiedliche technische Lösungen zur Erzeugung von Pendelbewegungen bekannt, die mit den Begriffen "kartesisches" und "achsspezifisches" Pendeln bezeichnet werden. Beim "kartesischen" Pendeln werden die kartesischen Koordinaten der Pendelfigur bzw. Pendelkurve vorgegeben und von der Robotersteuerung in ein roboterspezifisches Koordinatensystem transformiert. Es handelt sich hierbei also nicht um eine eigentliche Überlagerung einer Pendelbewegung zu einer beliebigen Bahnkurve, sondern die eigentliche Bahnkurve wird von Anfang an in Form einer Pendelbewegung erzeugt. Da bei diesem Verfahren eine Steuervorgabe für alle Achsen des Roboters notwendig ist, beansprucht es eine große Rechenkapazität und einen hohen Zeitaufwand.

Beim achsspezifischen Pendeln handelt es sich um eine tatsächliche Überlagerung einer Pendelbewegung zu einer beliebigen Bahnbewegung. Dabei wird die Bahnbewegung von der numerischen Steuerung für alle Achsen einer Werkzeugmaschine oder eines Roboters berechnet und die Pendelbewegung von der jeweils letzten Achse, das ist gewöhnlich die werkzeugführende Achse, ausgeführt.

Das "achsspezifische" Pendeln hat den Vorteil, daß eine zeitaufwendige Umwandlung der kartesischen Pendelwerte in achsspezifische Werte, wie das beim kartesischen Pendeln notwendig ist, entfällt. Damit können beim achsspezifischen Pendeln höhere Pendelfrequenzen erreicht werden als beim kartesischen Pendeln, so daß das achsspezifische Pendeln weiterhin technologierelevant bleibt.

Bei den bisherigen achsspezifischen Pendelverfahren wird die Beschleunigungs- und Bremsrampenberechnung für die Bewegungserzeugung der Pendelachse im Feininterpolator durchgeführt. Dadurch ist zum einen der Zeitaufwand für die Berechnung der Pendelbewegung noch relativ hoch, zum anderen muß die Beschleunigung und die Pendelgeschwindigkeit ständig überwacht werden, damit zulässige Grenzwerte nicht überschritten werden.

Ein weiterer Nachteil des achsspezifischen Pendelverfahrens liegt darin, daß eine Änderung der Bahngeschwindigkeit, die beispielsweise vom Anwender durch Vorgabe eines Override-Wertes oder automatisch über Sensoren auslösbar sein soll, von der Pendelbewegung nicht berücksichtigt werden kann, da die Berechnungen bezüglich der Bahngeschwindigkeitsänderung bereits im kartesischen Interpolator, der dem Feininterpolator vorgeschaltet ist, durchgeführt werden. Bei einer Override-Vorgabe durch die die Bahngeschwindigkeit beispielsweise verlangsamt wird, käme es zu einer Verzerrung der Pendelfigur, da die Geschwindigkeit der Pendelbewegung sich nicht mit der Bahngeschwindigkeit ändert.

Aufgabe der Erfindung ist es, ein Verfahren zur Beschleunigungs- und Geschwindigkeitsführung mindestens einer numerisch steuerbaren Achse einer Werkzeugmaschine oder eines Roboters zu schaffen, bei dem die vorstehenden Nachteile vermieden werden.

Erfindungsgemäß wird diese Aufgabe dadurch gelöst, daß aus einem vorgebbaren Bewegungsprofil Weg-Zeit-Gleichungen für vorgebbare Zeitintervalle ermittelt werden und daß die pro Taktzyklus der numerischen Steuerung vorzugebenden Bewegungsabschnitte der Achse aus der jeweiligen Weg-Zeit-Gleichung bestimmt werden, in deren Zeitintervall die Summe der für die Achsbewegung ausgegebenen Systemtaktzeiten liegt.

Das Verfahren läßt sich sowohl bei Steuerungen, die über analoge Einrichtungen zur Verfahrvorgabe verfügen, verwenden, als auch bei numerisch steuerbaren Achsen, deren Antriebseinrichtungen mit inkrementellen Meßgebern ausgerüstet sind. Im letzteren Fall werden die Bewegungsabschnitte in Inkrementen eines inkrementellen Meßgebers vorgegeben.

Das Verfahren ist prinzipiell für einmalige beschleunigungs- und geschwindigkeitsgeführte Vorgänge anwendbar, bei denen es wesentlich darauf ankommt, daß ein bestimmter Weg der Achsbewegung exakt eingehalten wird. Es eignet sich aber besonders vorteilhaft zur Erzeugung einer Pendelbewegung, wenn die Achsbewegung periodisch wiederholt wird.

Auf einfache und besonders vorteilhafte Weise läßt sich bei dem Verfahren eine Änderung der Bahngeschwindigkeit erreichen, wenn beispielsweise durch Vorgabe eines Override-Wertes oder durch Sensordaten die Summe der für die Achsbewegung ausgegebenen Systemtaktzeiten modifiziert wird.

Eine vorteilhafte Anwendung des Verfahrens liegt vor, wenn mit ihm eine Pendelbewegung einer Schweißvorrichtung, die an einem Roboter befestigt ist, erzeugt wird.

Ein Ausführungsbeispiel der Erfindung wird im folgenden anhand der Zeichnung näher erläutert. Dabei zeigen:

FIG 1 einen sechsachsigen Roboter,
FIG 2 eine Pendelbahn,
FIG 3 eine Pendelfigur,
FIG 4 die positive "Halbwelle" einer Pendelfigur,
FIG 5 das Geschwindigkeits-Zeitdiagramm zu FIG 4.

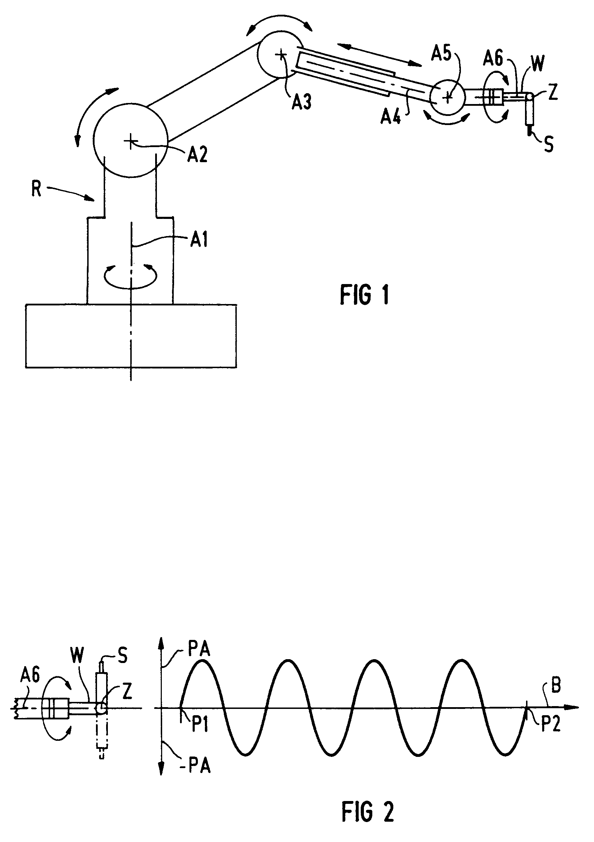

FIG 1 zeigt in schematischer Darstellung einen sechsachsigen Roboter, der über eine vertikale Achse A1, horizontale Achsen A2,A3 und A5, eine Linearachse A4 und eine Pendelachse A6 verfügt. An der Pendelachse A6 ist ein Werkzeug W, das beispielsweise ein Schweißbrenner sein kann, befestigt. Der nicht detailliert gezeigte Ort der Befestigung des Werkzeugs W an der Achse A6 wird auch mit Handwurzelpunkt bezeichnet. In der Verlängerung des Handwurzelpunkts liegt der Punkt Z des Werkzeugs W.

Dem Roboter R werden über eine nicht gezeigte numerische Steuerung Steuerungsdaten so vorgegeben, daß der zentrale Punkt Z entlang einer Bahnkurve im Raum bewegt wird. Dieser Bahnkurve läßt sich über eine Drehung der Achse A6 eine Schwenkbewegung des Werkzeugs W überlagern, so daß die Spitze S des Werkzeugs W von der Mitte der Bahnkurve ausschwenkt. Durch eine periodische Bewegung der Achse A6 läßt sich damit eine Pendelbewegung der Spitze S erzeugen, die zentrisch zur Bahnkurve verläuft.

In FIG 2 ist eine solche Pendelkurve dargestellt. Vom Roboter R aus FIG 1 ist in FIG 2 lediglich die Achse A6 mit dem Werkzeug W, dem Punkt Z und der Werkzeugspitze S gezeigt. Der Punkt Z wird durch die von der numerischen Steuerung vorgegebene Bahnkurve B von Punkt P1 zu Punkt P2 bewegt, während die Werkzeugspitze S eine Pendelbewegung mit der Pendelamplitude PA zentrisch zur Bahnkurve B ausführt. Die Bahnkurve B ist der Einfachheit halber als lineare Bahnkurve dargestellt; das Verfahren läßt sich jedoch bei beliebigen Bahnkurven anwenden.

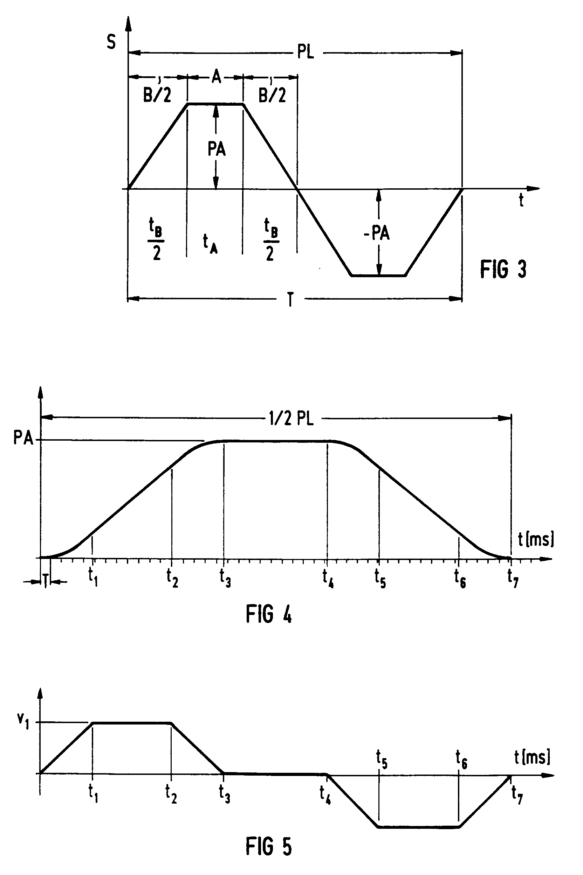

FIG 3 zeigt eine Periode einer Pendelbewegung mit der Periodendauer T, die sich aus der zweifachen Amplitudendauer $t_A$ und der zweifachen Wechseldauer $t_B$ zusammensetzt. Zu den jeweiligen Zeiten sind in FIG 3 auch die entsprechenden Strecken eingetragen, die sich bei vorgegebener Bahngeschwindigkeit $v_B$ ergeben. Während der Periodendauer $T_P$ soll die Pendellänge $P_L$ zurückgelegt werden. Während der Wechseldauer $t_B$ wird die Strecke B abgefahren, so daß während der Amplitudendauer $t_A$ noch die Strecke A zurückzulegen ist. Die Pendelamplitude ist wieder mit PA bezeichnet.

Bedingt durch den Systemtakt T der numerischen Steuerung ist es sinnvoll, wenn die Pendellänge PL nur ganzzahlige Vielfache des Feininterpolationsrasters einnimmt. Für die Pendelachse A6 des Roboters R wird per Maschinendatum die Beschleunigung $a_{max}$ und die maximale Geschwindigkeit $v_{max}$ festgelegt. Diese Werte dürfen beim Pendeln nicht überschritten werden.

Für die "off-line"-Berechnung des Pendelprofils gibt der Anwender die Bahngeschwindigkeit $v_B$, die Pendellänge PL, die Pendelamplitude PA und die Pedelform $t_A/t_B$ vor. Für die Pendellänge PL, die Pendelform PF, die Strecke B, die Zeit für die Wechseldauer $t_B$, die Zeit für die Amplitudendauer $t_A$, und die Zeit für die Pendelperiode $T_p$, gelten die den Gleichungen (1) bis (6) entnehmbaren Beziehungen.

$$PL = 2 \times (A + B) \qquad (1)$$

$$PF = A/B = t_A/t_B \qquad (2)$$

$$B = PL/(2 (1 + PF)) \qquad (3)$$

$$t_B = B/v_B \qquad (4)$$

$$t_A = B \times PF / v_B = PF \times t_B \qquad (5)$$

$$T_P = t_A + t_B \qquad (6)$$

Da die Pendelfigur sowohl für die positive als auch für die negative Auslenkung die gleiche Form besitzt genügt es, für die weiteren Berechnungen nur die positive Pendelauslenkung zu betrachten. Zur Aufbereitung des Pendelprofils sind bei gegebener maximaler Beschleunigung $a_{max}$ die Pendelgeschwindigkeit $v_1$ und die Zeiten $t_1$ bis $t_7$ zu bestimmen. Dies und das weitere Pendelverfahren sei im folgenden anhand der Figuren 4 und 5 erläutert.

FIG 4 zeigt die positive Auslenkung der Pendelfigur, die in die Zeitabschnitte $t_1$ bis $t_7$ unterteilt ist. Die Unterteilung der Pendelfigur in Zeitintervalle t größer gleich $t_{n-1}$ kleiner $t_n$) ist so gewählt, daß die Achse A6 in einem jeweiligen Zeitabschnitt entweder beschleunigt, mit konstanter Geschwindigkeit oder mit der Geschwindigkeit v = 0 verfahren wird. Das zugehörige Geschwindigkeitsdiagramm zu FIG 4 ist der FIG 5 zu entnehmen.

Die Zeitachse in FIG 4 ist neben den Zeitabschnitten von $t_1$ bis $t_7$ noch in das Systemtaktraster des Systemtakts T unterteilt. Es ist zu erkennen, daß die Zeitpunkte $t_1$ bis $t_6$ in der Regel nicht mit einem Taktzeitpunkt $i_N$T zusammenfallen.

Zur Erzeugung der Pendelbewegung wird zunächst die Pendelgeschwindigkeit $v_1$ nach Gleichung (7) berechnet:

$$V_1 = t_B/4 \cdot a_{max} +/- (t_B^2/16 \cdot a^2_{max} - PA \cdot a_{max})^{1/2} \qquad (7)$$

Wählt man aus den beiden möglichen Werten den kleineren Wert für die Pendelgeschwindigkeit, so ist dadurch sichergestellt, daß die maximal zulässige Geschwindigkeit nicht überschritten wird.

Sodann werden präparativ zu jedem Zeitabschnitt O bis $t_1$, $t_1$ bis $t_2$, ..., $t_6$ bis $t_7$, die Weg-Zeit-Gleichungen ermittelt und der numerischen Steuerung vorgegeben. Für das Pendelprofil der FIG 4 ergeben sich folgende Gleichungen:

$$S_1(t) = 1/2 \, at^2 \qquad t_0 - i_N T \qquad t_1 \qquad (8)$$

$$S_2(t) = S_1 + V_1 (t-t_1) \qquad t_1 - i_N T \qquad t_2 \qquad (9)$$

$$S_3(t) = S_2 + V_1(t-t_2) - 1/2 \quad a(t-t_2)^2 \qquad t_2 - i_N T \qquad t_3 \qquad (10)$$

$$S_4(t) = PA \qquad t_3 - i_N T \qquad t_4 \qquad (11)$$

$$S_5(t) = S_4 - 1/2 \, a(t-t_4)^2 \qquad t_4 - i_N T \qquad t_5 \qquad (12)$$

$$S_6(t) = S_4 - (S_1 + V_1(t-t_5)) \qquad t_5 - i_N T \qquad t_6 \qquad - \qquad (13)$$

$$S_7(t) = S_4 - (S_1 + V_1(t-t_5) - 1/2 \quad a(t-t_6)^2 \qquad t_6 - i_N T \qquad t_7 \qquad (14)$$

Während des Interpolationsverfahren wird stets die Summe der bisher ausgegebenen Interpolationstakte bzw. Feininterpolationstakte gebildet ($i_N$ = Summe i) und jeweils geprüft, in welchen Zeitabschnitt $t_{n-1}$ kleiner/gleich $i_N$ x T kleiner $t_n$ die Summe der bisher ausgegebenen Taktzeiten fällt. Aus der für diesen Zeitabschnitt zuständigen Weg-Zeit-Gleichung wird dann der an die Achse A6 auszugebende Bahnabschnitt, das sind im Fall einer inkrementellen Verfahrvorgabe die Anzahl der Inkremente, berechnet und ausgegeben.

Ein durch den Anwender oder durch einen Sensor vorgegebener Override läßt sich auf einfache Weise durch den Feininterpolator berücksichtigen. Dazu wird die jeweils neue Summe der Interpolationstakte $i_N$ aus der Summe der vorhergehenden Interpolationstakte $i_{N-1}$ und des Override-Wertes bzw. Override-Faktors f nach Gleichung (15) bestimmt.

$$i_N = i_{N-1} + f \text{ mit } f = 0...1 \qquad (15)$$

Damit ergibt sich die Summe der bisher insgesamt ausgegebenen Taktzeiten zu:

$$t_N = i_N T \text{ mit } T \text{ als Taktzeitkonstante des Feininterpolators} \qquad (16)$$

Die jeweilige Pendelverfahrvorgabe an die Achse A6 läßt sich dann aus der Differenz des bisher zurückgelegten Weges $S(t_{N-1})$ und des zum Zeitpunkt $t_N$ zurückzulegenden Gesamtweges $S(t_N)$ bestimmen:

$$\text{delta } S = S(t_N) - S(t_N - 1) \qquad (17)$$

Eine Änderung der Pendelgeschwindigkeit wird also bei einer Override-Vorgabe von f größer 0 und kleiner als 1 in einfacher Weise dadurch erzielt, daß die sonst starre Systemtaktzeit über die Summe der jeweils ausgegebenen Interpolationstakte "manipuliert" wird, so daß es gewissermaßen zu einer Dehnung der Zeitintervalle $t_{n-1}$ kleiner $t_n$ kommt.

Der Vollständigkeit halber sei noch erwähnt, daß die Pendellänge PL auch gleich Null sein kann, so daß die Pendelbewegung an einem beliebigen Raumpunkt ausgeführt werden kann.

## Patentansprüche

1. Verfahren zur Beschleunigungs- und Geschwindigkeitsführung mindestens einer steuerbaren Achse (A6) einer Werkzeugmaschine oder eines Roboters (R), wobei
   a) aus einem vorgebbaren Bewegungsprofil Weg-Zeit-Gleichungen ($S_n(t)$) für vorgebbare Zeitintervalle ($t_{n-1}, t_n$) ermittelt werden;
   b) die nach jedem Taktzyklus (T) der numerischen Steuerung vorzugebenden Bewegungsabschnitte ($S_n(t)$) der Achse (A6) aus der jeweiligen Weg-Zeit-Gleichung ($S_n(t)$) bestimmt werden, in deren Zeitintervall ($t_{n-1}, t_n$) die Summe der für die Achsbewegung ausgegebenen Systemtaktzeiten ($i_N T$) liegt.

2. Verfahren nach Anspruch 1, wobei die Bewegungsabschnitte in Inkrementen eines inkrementellen Meßgebers vorgebbar sind.

3. Verfahren nach einem der vorstehenden Ansprüche mit einer periodischen Wiederholung der Achsbewegung.

4. Verfahren nach einem der vorstehenden Ansprüche, wobei die Summe der für die Achsbewegung ausgegebenen Systemtaktzeiten ($i_N T$) modifizierbar ist.

5. Anwendung des Verfahrens nach den Ansprüchen 1-4 zur Erzeugung einer Pendelbewegung einer an einem Roboter (R) befestigten Schweißvorrichtung (W).

FIG 1

FIG 2

FIG 3

FIG 4

FIG 5

**Europäisches Patentamt**

# EUROPÄISCHER RECHERCHENBERICHT

Nummer der Anmeldung

EP  91 10 5217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | ELEKTRONIK. Bd. 34, Nr. 19, September 1985, MUNCHEN DE Seiten 83 - 89; PROF. DIPL.-ING. PETER F. ORLOWSKI ET AL.: 'Fahrkurvenrechner mit Einplatinen-Computer.' | 1,4,5 | G05B19/407 G05B19/42 |
| Y | * Seite 83 - Seite 89 * | 2,3 | |
| | --- | | |
| Y | DE-A-3 434 608 (SIEMENS) | 2 | |
| A | * Zusammenfassung; Abbildung 1 * | 4 | |
| | --- | | |
| Y | US-A-4 677 276 (NIO ET AL.) | 3 | |
| A | * das ganze Dokument * | 5 | |
| | --- | | |
| A | EP-A-0 266 424 (HITACHI CONSTRUCTION MACHINERY CO.) * Zusammenfassung; Ansprüche 3,9,17; Abbildung 8 * | 1,5 | |
| | --- | | |
| A | EP-A-0 308 513 (FANUC) * das ganze Dokument * | 1,5 | |
| | --- | | **RECHERCHIERTE SACHGEBIETE (Int. Cl.5)** |
| A | US-A-3 952 238 (CUTLER) * das ganze Dokument * | 1-4 | |
| | --- | | G05B |
| A | US-A-4 118 620 (WALL JR. ET AL.) * das ganze Dokument * | 1,5 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 27 NOVEMBER 1991 | J.P. Ressenaar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)